# EUROPEAN PATENT APPLICATION

(11) **EP 0 583 511 A1**
(43) Date of publication of application: **23.02.1994**
(21) Application number: 92202514.3
(22) Date of filing: 17.08.1992
(51) Int. Cl.: H04Q 11/04, H04M 11/06

(54) **Method for communicating in-house messages along an S-bus of an ISDN-network**

(71) Applicant: CLB ELECTRONICS B.V., NL-1483 GA De Rijp (NL)
(72) Inventor: Van Wieringen, Erik Jelle, 1072 JC Amsterdam (NL)
(74) Representative: de Bruijn, Leendert C.

(57) **Abstract**

Method for communicating in-house messages along an S-bus of an ISDN-network between terminals TE connected to said S-bus and a network terminator NT2 and vice versa. The discrimination between regular messages and in-house messages is obtained by using inverted address field extension bits EA for in-house messages. Preferably the messages are transferred without the services of layer 3 (CCITT defenition) Messages of which the address frame comprises only one octet are excluded in case in the ISDN-network LAPB-messages are transferred.

## Description

The invention relates to a method for communicating in-house messages along an S-bus of an ISDN-network between terminals TE connected to said S-bus and a network terminator NT2 and vice versa.

The S-bus in an ISDN-network, of which the characteristics are defined in CCITT I.430, is basically suited for use as home-bus. In that case the available channels will be used for transferring messages upstream from various TE terminals to the network terminator NT2 and for transferring messages downstream from said network terminator NT2 to the various terminals TE.

The terminals connected to the S-bus may not only consist of regular terminals such as telephone sets, facsimile equipment or telex apparatuses transmitting messages which are destined to be transferred along the actual ISDN-network. On the other hand the terminals may also consist of sensors and actuators, such as applied in burglary alarm systems, monitoring systems in hospitals or fire/smoke alarm systems.

In particular the D-channel is suited for transferring messages from the sensors and actuator type of sensors. The access procedure to this channel enables multidrop topologies in that the failsafe transmission and transmission priority are not endangered.

In case both terminals of the first category (telephone sets, facsimile equipment , telex etc.), generating outgoing messages to be transferred along the ISDN-network, and terminals of the second category (sensors and actuators), generating and receiving "in-house" messages, are connected to one and the same S-bus then the messages generated by both types of terminals become intermingled. However, all system components should have the capability to discriminate between messages generated by terminals of the first category and messages generated by terminals of the second category, both in the upstream direction as well as in the downstream direction.

To enable the above-mentioned discrimination the invention provides a method for communicating in-house messages along an S-bus of an ISDN-network between terminals TE connected to said S-bus and a network terminator NT2 and vice versa, whereby discrimination between regular messages and in-house messages is obtained by using inverted address field extension bits EA for in-house messages.

To embody the "in-house" components as simple as possible it preferred that the messages are transferred without the services of layer 3 (CCITT defenition). In that case the costs of the system components will be practically minimised because the services of layer 3 are avoided. For further details about the layers 2 and 3 reference is made to the respective CCITT recommendations Q.921 and Q.931.

In case the address frame comprises only one octet the address extension bit would be equal to 1. However, the single octet address field in which the address field extension bit equals 1 is according to the CCITT recommendation Q.921 reserved for the exchange of LAPB-messages. So in case in the ISDN-network LAPB-messages are transferred it is preferred that messages of which the address frame comprises only one octet are excluded.

The invention will be explained in more details with reference to the attached drawings.

Figure 1 illustrates schematically a number of conceivable S-bus configurations which can be used for in-house communication.

Figure 2 illustrates the structure of the address frame as recommended by the CCITT for communication along the ISDN-network.

Figure 3 illustrates the structure of the address frame for in-house communication as proposed by the invention.

Figure 4 illustrates schematically a network terminator NT2 including a discriminator circuit.

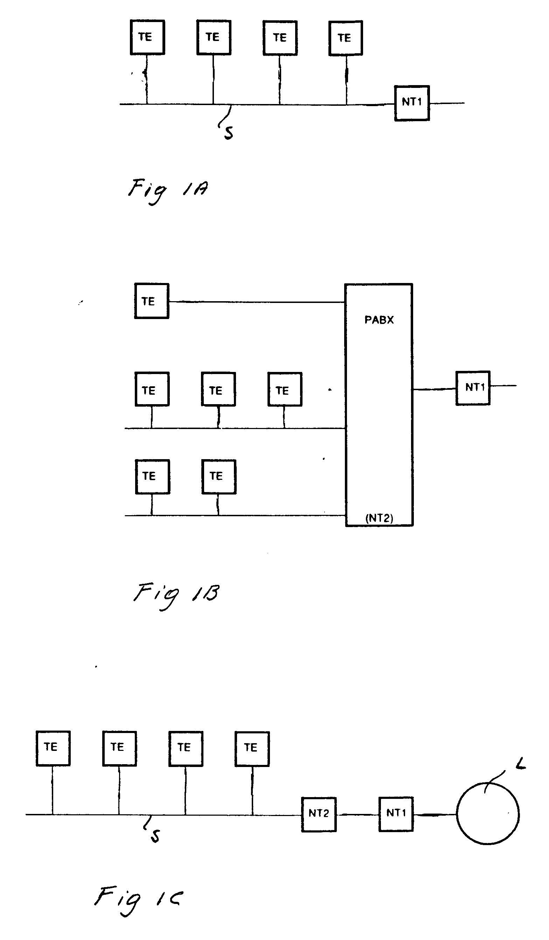

Figure 1A shows the simplest form of an S-bus suitable to be used as an in-house network. The bus consists of a cable comprising connectors through which various terminals can be connected to the cable at various locations. The cable S runs between a number of terminals TE and a network terminator NT1. The network terminator NT1 is of the first type and therefore only terminals of the type TE1 can be connected to the S-bus. As will be explained hereinafter this configuration is not suitable to bring the inventive ideas into practice.

Another in-house network is illustrated in figure 1b. In this figure the network comprises a number of terminals TE which are connected to an in-house exchange PABX which functions as a network terminator NT2. At the right hand side of figure 1b the local exchange PABX is connected to a further network terminator of type one NT1. Because all the terminals are connected to an NT2 it is possible to connect both ISDN-terminals such as telephone handsets, telex apparatuses and facsimile equipment to the local exchange as well as to connect none ISDN-terminals such as simple switches, sensors, actuators etc. This type of configuration is suitable to implement the invention as will be explained hereinafter.

Figure 1c shows a more general view on the type of network in which the invention can be applied. The network comprises a number of terminators TE which are connected through a cable network S to a type two network terminator NT2. This network terminator NT2 might be connected to a type one network terminator NT1, which may be connected further to a local ISDN-exchange.

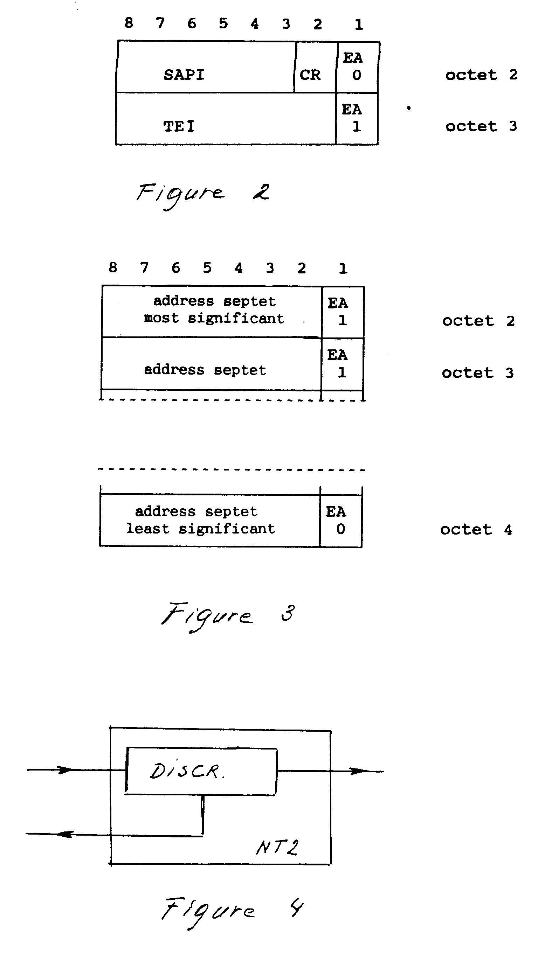

In figure 2 the address field format, recommended in CCITT Q.921 is illustrated. The shown address field format contains the address field extension bits EA, a command/response indication bit C/R, a datalink layer surface access point identifier SAPI-subfield and a terminal end point identifier TEI-subfield. The address field range is extended by reserving the first transmitted bit of the address field octet to indicate the final octet of the address field. The presence of a 1 in the first bit of an address field octet signals that it is the final octet of the address field. The double octet address field for LAPD-operation shall have bit 1 of the first octet set to 0 and bit one of the second octet set to 1. In general all address field extension bits EA of an complete address frame are equal to zero except the address field extension bit of the last octet which is equal to 1. For more details about the address field format reference is made to the CCITT recommendations Q.920 - Q.921.

The terminals, which are connected in figure 1c to the bus system S could be of the first category which transmits messages through NT2 and through NT1 to the ISDN-network L. Terminals of this first category are for instance telephone handsets, telex apparatuses and facsimile equipment. Other terminals which can be use purely within the in-house network are for instance senses and actuators which function in a burglary alarm system, in a fire or smoke alarm system, in a nurse alerting system in hospitals, etc. All these terminals only send messages upstream to the network terminator NT2 and a receive message downstream from this network terminator NT2. If both categories of terminals are connected to the bus system S than in one way or another the network terminator NT2 should have the capability to discriminate between the messages received from terminals of the first category which have to be transferred to the further network terminator NT1 and messages received from the terminals of the second category which have to be returned and transmitted downstream on the bus system S.

According to the invention this discrimination mechanism is based on the use of inverted address field extension bits for terminals of a second category, i.e. terminals which are exclusively used for in-house network purposes. The address field structure, which is according to the invention proposed for this type of terminals is illustrated in figure 3. As is illustrated therein all address field extension bits EA have the value 1 with the exception of the address field extension bit corresponding to the lowest significant address septet (octet 4 in figure 3) which has the value 0. This way of discriminating between messages from both categories of terminals has various advantages:
1) the generation of the address field extension bits can be performed simply by inverting the normally address field extension bits;
2) all the normal circuits for detecting address field extension bits can be used without any change.

Difficulties may arise if the used addresses have only one octet. Because of the inversion of the address field extension bit messages comprising one octet addresses can not be discriminated. Furthermore in recommendation Q.921 the single octet address field is reserved for LAPB-operations in order to allow a single LAPB-datalink connection to be multiplexed along with LAPB-datalink connections. The support of LAPB is optional, both from user standpoint as well as from network standpoint. However, the application of the invention is excluded for an S-bus structure in a mixed system for LAPB-operations. Therefore, the method according to the invention is not conceivable with the minimum configuration illustrated in figure 1a.

Figure 4 illustrates very schematically a network terminator NT2 which in agreement with the invention comprises a discriminator circuit for discriminating in-house address fields (illustrated in figure 3) and "normal" ISDN-address field (illustrated in figure 2). Messages received from in-house terminals are returned back to the downstream side of the S-bus structure whereas messages received from regular ISDN-terminals are transferred in a normal way.

## Claims

1. Method for communicating in-house messages along an S-bus of an ISDN-network between terminals TE connected to said S-bus and a network terminator NT2 and vice versa, whereby discrimination between regular messages and in-house messages is obtained by using inverted address field extension bits EA for in-house messages.

2. Method according to claim 1 characterized in that the messages are transferred without the services of layer 3 (CCITT defenition)

3. Method according to claim 1 or claim 2, characterized in that messages of which the address frame comprises only one octet are excluded in case in the ISDN-network LAPB-messages are transferred.

4. ISDN-network comprising an S-bus for connecting a number of terminals TE to a network terminator NT2 and for communicating in-house messages along said S-bus between in-house terminals and for transferring messages received from other terminals, characterized in that the network terminator NT2 comprises a discriminator circuit for discriminating between address fields comprising series of address field extension bits as specified in the CCITT-recommendation Q.921 and address fiels comprising series of address field extension bits which are inverted.
